# EUROPÄISCHE PATENTSCHRIFT

(11) **EP 0 979 168 B1**
(45) Veröffentlichungstag und Bekanntmachung des Hinweises auf die Patenterteilung: **13.02.2002**
(21) Anmeldenummer: 98924510.5
(22) Anmeldetag: 23.04.1998
(51) Int. Cl.: B32B 19/04, E04B 1/94, C09K 21/00

(54) **FEUERFESTER PLATTENVERBUND, EIN VERFAHREN ZU DESSEN HERSTELLUNG SOWIE DESSEN VERWENDUNG**
REFRACTORY STRATIFIED SLAB, PROCESS FOR PRODUCING THE SAME AND ITS USE
DALLE STRATIFIEE REFRACTAIRE, SON PROCEDE DE FABRICATION ET SON UTILISATION

(30) Priorität: 28.04.1997 EP 97107034
(43) Veröffentlichungstag der Anmeldung: 16.02.2000
(73) Patentinhaber: Mineralka d.o.o., 1380 Cerknica (SI)
(72) Erfinder: SILC, Milan, 1236 Trzin (SI); MAROLT, Iva, 1380 Cerknica (SI)
(74) Vertreter: Dungler, Karin
(86) Internationale Anmeldenummer: IB9800952
(87) Internationale Veröffentlichungsnummer: WO9849004

(56) Entgegenhaltungen:
- CH-A- 590 798
- DE-A- 2 600 024
- DE-A- 2 700 217
- DE-A- 2 700 608
- DE-A- 3 206 218
- US-A- 4 477 094
- F. Eichler & H. Arndt: "Bauphysikalische Entwurfslehre"; Verlagsges. Rudolf Müller, Köln-Braunsfeld (DE); S. 69-72 (1982)

## Beschreibung

Die Erfindung betrifft einen dreischichtigen feuerfesten Plattenverbund bestehend im wesentlichen aus anorganischen Blähmaterialien unterschiedlicher Korngröße wie geblähtem Vermiculit, welche mit Bindemitteln beleimt und anschließend verpreßt sind, wobei zumindestens zwei Lagen derartiger Blähmaterialien vorgesehen sind, zwischen welchen eine flächige Verstärkungsschicht liegt, sowie dessen Verwendung.

Dreischichtige Plattenverbunde der vorgenannten Art sind beispielsweise aus der CH-A-590 798 vorbekannt. Diese sind jedoch nicht feuerfest, da sie eine Kernschicht aus magnesitgebundener Holzwolle aufweisen.

Aus der EP-A1-43144 ist ein Verfahren zur Herstellung von unbrennbaren, feuerfesten Plattenverbunden aus drei Schichten, die aus anorganischen Blähmaterialien wie Vermiculit und Perlit bestehen, vorbekannt. In diesem Plattenverbund bildet jedes Material für sich selbst eine Plattenschicht. Zur Herstellung der einzelnen Plattenschichten wird ein Granulat aus den genannten anorganischen Blähmaterialien mit einem Bindemittel versetzt, welches beispielsweise eines auf Basis von duroplastischen Harzen in Kombination mit Phosphaten sein kann. Das derart behandelte Granulat wird anschließend zu Platten verpreßt.

Bedingt durch den ausschließlichen Einsatz anorganischer Materialien weisen die endgefertigten, feuerfesten Plattenverbunde ein hohes Gewicht sowie relativ hohe Steifigkeitswerte auf.Ihre Weiterverarbeitung, beispielsweise im Rahmen von üblichen Formgebungsprozessen ist daher nur schwer bis gar nicht möglich.

Gemäß der DE-A-26 00 024 wurde daher der Anteil an anorganischen Blähmaterialien insoferne reduziert, daß Schichten aus mit Bindemitteln gebundenen Fasermittel vorgesehen sind. Dadurch wird zwar das Gewicht der Platte reduziert; die internationalen Brandschutznormen können jedoch nicht mehr erfüllt werden.

Aufgabe der vorliegenden Erfindung ist es daher, einen feuerfesten Plattenverbund anzugeben, welcher im Rahmen üblicher Formgebungsprozesse weiterverarbeitbar ist, die gewünschten mechanischen Schallschutz- und Wasserbeständigkeits-Charakteristiken bei relativ niedrigem Gewicht ermöglicht und gleichzeitig die internationalen Brandschutzbestimmungen erfüllt.

Erfindungsgemäß wird daher ein dreischichtiger feuerfester Plattenverbund, der eingangs genannten Art angegeben, welcher dadurch gekennzeichnet ist, daß die Kernschicht eine Platte aus beleimten Blähmaterialien unterschiedlicher Korngröße in Kombination mit anorganischen, faserhältigen Füllstoffen ist, und daß an diese Kernschicht beidseitig Außenschichten in Form von Platten, bestehend aus zumindestens zwei Lagen beleimter Blähmaterialien, zwischen welchen eine mechanisch beanspruchbare, durchgehend flächige Verstärkungsschicht vorliegt, vorgesehen sind.

Ferner weist der erfindungsgemäße dreischichtige feuerfeste Plattenverbund den Vorteil auf, daß die Verstärkungsschicht eine mechanisch verformbare Metallschicht, ein Gewebe, Gelege oder Vlies aus organischen und/oder anorganischen Fasern ist.

Ferner können in vorteilhafter Weise zu beiden Seiten der Kernschicht Metallfolien vorgesehen sein. Erfindungsgemäß wird der dreischichtige feuerfeste Plattenverbund für den Innenbereich im Hoch- und Schiffbau verwendet.

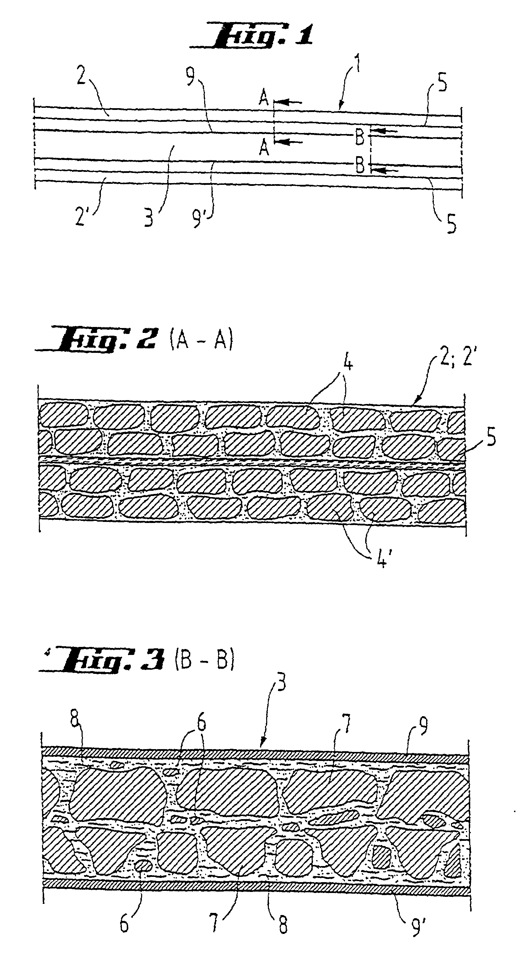

Die Erfindung wird nunmehr anhand der Figuren 1 - 3 näher erläutert:

In Fig. 1 ist ein dreischichtiger, feuerfester Plattenverbund 1 dargestellt. Dieser weist die Kernschicht 3 auf, welche in ihrer Zusammensetzung im wesentlichen der Fig. 3 entspricht. Die Kernschicht 3 weist beidseitig die Außenschichten 2, 2' auf, welche im wesentlichen der Fig. 2 entsprechen. Die Außenschichten 2, 2' weisen jeweils die Verstärkungsschicht 5 auf. Figur 2 zeigt vergrößert die Außenschichten 2, 2' im Schnitt gemäß der Linie A-A in Fig. 1. Diese bestehen aus den Lagen 4, 4', bestehend aus beleimtem, expandiertem (geblähtem) Vermiculit. Zwischen den Schichten 4 und 4' ist die Verstärkungsschicht 5 vorgesehen.

In Fig. 3 ist die Kernschicht 3 vergrößert im Schnitt gemäß der Linie B-B in Fig.1 dargestellt. Darin sind mit den Bezugszeichen 6 die Vermiculitteilchen mit geringerer Korngröße dargestellt, während mit Bezugszeichen 7 die Vermiculitteilchen mit größerer Korngröße wiedergegeben sind. Zwischen den genannten Vermiculitteilchen sind die anorganischen, faserhältigen Füllstoffe bzw. Perlit 8 vorgesehen.

Die Erfindung wird nunmehr anhand eines Beispiels näher erläutert.

Die erfindungsgemäße Dreischichtplatte 1 wird beispielsweise derart hergestellt, daß Vermiculit unterschiedlicher Herkunft sowie unterschiedlicher Korngröße gemäß Bezugszeichen 4, 5 und 6 einem Ofen zugeführt wird. Die Temperatur der Heißbearbeitung beträgt 800 bis 850 Grad Celsius, je nachdem um welchen Vermiculittyp es sich handelt und welche Korngröße die Vermiculitteilchen haben. Die Volumenerhöhung der Vermiculitteilchen erfolgt auf einen etwa acht- bis zehnfachen Wert der ursprünglichen Größe. Bevor die Vermiculitteilchen den Mischanlagen zugeführt werden, werden Verunreinigungen abgetrennt.

In den Mischanlagen werden die Vermiculitteilchen mit Bindemitteln beleimt. Als Bindemittel werden beispielsweise Harnstoff-Formaldehydharze, Silikate (Wasserglas) und Phosphate sowie Mischungen daraus eingesetzt.

Die Bindemittel werden in Lösung eingesetzt; der Bindemittelanteil liegt in einem Bereich von 40 bis 70. Dadurch liegt der Bindemittelanteil in den Außenschichten 2, 2' in einem Bereich von 15 bis 30% und in der Kernschicht 3 in einem Bereich von 15 bis 30%.
Nach dem Beleimen beträgt der Bindemittelanteil in der Außenschicht 2, 2' etwa 20 %.
Der Anteil an Bindemittel in der Kernschicht beträgt ebenso etwa 20 %.

Die Herstellung der Außenschichten 2, 2' wird beispielsweise wie folgt durchgeführt:

Es wird ein Schüttkuchen der beleimten Vermiculitteilchen 4 auf ein Förderband gestreut und auf diese Schüttung per Hand die Verstärkungsschicht 5 aufgebracht. Diese Verstärkungsschicht 5 kann beispielsweise eine Matte oder ein Netz aus Carbon-, Glas- bzw. Metallfasern verschiedener Stärke und Netzgewebe sein.

Dieser Schüttkuchen wird anschließend einer diskontinuierlich arbeitenden Presse zugeführt und bei einer Temperatur von 160° Celsius und einem Preßdruck von 150 bis 200 N/cm² verpreßt. Es wird ein Halbfabrikat mit dem Aufbau gemäß Fig. 2 erzeugt. Dieses kann einerseits als Endprodukt eingesetzt werden oder es wird für die Herstellung des Plattenverbundes beispielsweise gemäß Fig. 1 weiterverwendet.

Für die Herstellung der Kernschicht 3 werden beleimte Vermiculitteilchen 6, 7 mit unterschiedlicher Korngröße mit anorganischen, faserhältigen Füllstoffen in einem Mischer gemischt. Die Korngröße der kleineren Vermiculitteilchen 6 liegt in einem Bereich von 0,350 bis 3 mm. Die Korngröße der größeren Vermiculittelchen liegt in einem Bereich von 1 bis 2,5 mm. Als anorganische faserhältige Füllstoffe 8 können beispielsweise Gesteinswolle bzw. Perlit zugemengt werden. Diese dienen in der endgefertigten Platte als Schall-, Kälte- und Wärmedämmstoff. Zur weiteren Erhöhung der Schallisolierung kann zu beiden Seiten der Kernschicht 3 eine Metallfolie 9, 9' vorgesehen werden, deren Dicke in einem Bereich von 0,075 mm bis 0,15 mm liegt.

Aus dieser Mischung wird ebenso ein Schüttkuchen hergestellt, welcher in eine diskontinuierliche Presse übergeführt wird, in der er bei einer Temperatur von 130° Celsius und einem Preßdruck von 150 bis 200 N/cm² zu einem Halbfabrikat verarbeitet wird.

Dieses kann nun für folgende Verwendungszwecke eingesetzt werden:
- als Endprodukt, beispielsweise als Brandschutzplatte bzw.
- als Halbfabrikat in einem Plattenverbund gemäß Fig.1.

Der erfindungsgemäße Plattenverbund 1 wird nunmehr aus den Halbfabrikaten 2, 2' für die Ausbildung der Außenschichten und aus dem Halbfabrikat 3 für die Ausbildung der Kernschicht hergestellt.

Dabei wird ein Preßstapel derart gebildet, daß die Außenschichten 2, 2' die Kernschicht 3 beidseitig umgeben. Dieser Preßstapel wird in einer Presse nach dem Kaltverfahren verpreßt.

Zum Zusammenkleben wird ein schwer entflammbarer Polyurethankleber verwendet.

Die verbesserten Produkteingenschaften des erfindungsgemäßen Plattenverbundes 1 werden nun mit einem an sich bekannten Dreischichtplattenverbund mit der Bezeichnung NEGOR R, welcher ausschließlich aus anorganischen Materialien besteht, verglichen.

Die Ergebnisse sind folgender Tabelle zu entnehmen:

| | NEGOR® | PLATTE 1 |
|---|---|---|
| Zahl der Schichten | 3 | 3 |
| % der Bindemittel in Außenschicht | 40 | 22 |
| % der Bindemittel in Innenschicht | 23 | 20 |
| Verstärkungen | / | 4 |
| Stärke mm | 19 | 19 |
| Raumgewicht kg/mⁿ 10% | 840 +/- 10% | 580 +/- |
| Biegebruchfestigkeit MPa | 4-5 | 10-11 |
| Unbrennbarkeit | JA | JA |
| Schalldämmung dB | 27 | 32 |
| Wasserabstoßend | NEIN | JA |

Aus der Tabelle ist zu ersehen, daß der Bindemittelgehalt des erfindungsgemäßen Plattenverbundes wesentlich geringer ist als der der vorbekannten, aus reinen anorganischen Blähmaterialien bestehenden Platte mit der Bezeichnung NEGOR®. Dennoch können überraschenderweise die mechanischen Eigenschaften beibehalten werden, und zwar aufgrund der Verstärkungsschicht 5. Durch die Maßnahme dieser Verstärkungsschicht ist ferner das Gewicht des Plattenverbundes niedriger als das der NEGOR®-Platte, was zu konstruktionstechnischen Vorteilen führt.

Ferner ist der Wert betreffend Biegebruchfestigkeit höher, so-daß sich der erfindungsgemäße Plattenverbund 1 leichter als die NEGOR®-Platte verformen läßt.

Aufgrund dieser verbesserten technischen Parameter kann der erfindungsgemäße Plattenverbund in leicht handbarer Weise für den Innenausbau von Schiffen und Gebäuden eingesetzt werden, wobei ebenso die internationalen Normen hinsichtlich Brandschutz erfüllt sind.

## Patentansprüche

1. Dreischichtiger, feuerfester Plattenverbund, bestehend im wesentlichen aus anorganischen Blähmaterialien unterschiedlicher Korngröße wie geblähtem Vermiculit, welche mit Bindemitteln beleimt und anschließend verpreßt sind, wobei zumindest zwei Lagen derartiger Blähmaterialien vorgesehen sind, zwischen welchen eine flächige Verstärkungsschicht liegt **dadurch gekennzeichnet, daß** die Kernschicht eine Platte aus beleimten Blähmaterialien unterschiedlicher Korngröße in Kombination mit anorganischen, faserhältigen Füllstoffen ist, und daß an diese Kernschicht beidseitig Außenschichten in Form von Platten, bestehend aus zumindestens zwei Lagen beleimter Blähmaterialien, zwischen welchen eine mechanisch beanspruchbare, durchgehend flächige Verstärkungsschicht vorliegt, vorgesehen sind.

2. Dreischichtiger, feuerfester Plattenverbund nach Anspruch 1, **dadurch gekennzeichnet, daß** die Verstärkungsschicht eine mechanisch verformbare Metallschicht ist.

3. Feuerfester Plattenverbund nach Anspruch 1 oder 2, **dadurch gekennzeichnet, daß** die Verstärkungsschicht ein Gewebe, Gelege oder Vlies aus organischen und/oder anorganischen Fasern ist.

4. Dreischichtiger, feuerfester Plattenverbund nach einem der Ansprüche 1 bis 3, **dadurch gekennzeichnet, daß** zu beiden Seiten der Kernschicht Metallfolien vorgesehen sind.

5. Verwendung eines dreischichtigen, feuerfesten Plattenverbundes nach einem der Ansprüche 1 - 4 für den Innenbereich im Hoch- und Schiffbau.

## Claims

1. Three-layered, refractory stratified slab, consisting substantially of inorganic expanded materials of differing grain size such as expanded vermiculite, which are sized with binding agents and then pressed, at least two layers of such expanded materials being provided between which a flat reinforcing layer lies, **characterised in that** the core layer is a slab formed from sized expanded materials of differing grain size in combination with inorganic, fibrous fillers, and **in that** there are provided on both sides of this core layer outer layers in the form of slabs comprising at least two layers of sized expanded materials, between which there is a continuously flat reinforcing layer which can be mechanically loaded.

2. Three-layered, refractory stratified slab according to claim 1, **characterised in that** the reinforcing layer is a mechanically deformable metal layer.

3. Refractory stratified slab according to claim 1 or 2, **characterised in that** the reinforcing layer is a woven fabric, a random fibre structure or a non-woven, formed from organic and/or inorganic fibres.

4. Three-layered, refractory stratified slab according to one of claims 1 to 3, **characterised in that** metal film are provided on both sides of the core layer.

5. Use of a three-layered, refractory stratified slab according to one of claims 1 to 4 for the interior domain in building construction and shipbuilding.

## Revendications

1. Dalle stratifiée réfractaire à trois couches, constituée essentiellement de matériaux minéraux expansés, tels que vermiculite expansée, sous forme de grains de tailles différentes, qui sont encollés à l'aide de liants et sont ensuite pressés, les couches comprenant essentiellement au moins deux couches de tels matériaux expansés entre lesquelles se trouve une couche de renforcement, **caractérisée par le fait que** la couche de coeur est une plaqué en matériaux expansés encollés de grains de tailles différentes, en combinaison avec des charges minérales contenant des fibres, et que cette couche de coeur est doublée sur les deux côtés de couches extérieures sous forme de plaques constituées d'au moins deux plis de matériaux expansés encollés prenant entre eux une couche de renforcement continue, supportant les sollicitations mécaniques.

2. Dalle stratifiée réfractaire à trois couches, selon la revendication 1, **caractérisée par le fait que** la couche de renforcement est une couche métallique mécaniquement déformable.

3. Dalle stratifiée réfractaire, selon la revendication 1 ou 2, **caractérisée par le fait que** la couche de renforcement est un tissu ou un non tissé de fibres organiques et/ou minérales.

4. Dalle stratifiée réfractaire à trois couches, selon l'une des revendications 1 à 3, **caractérisée par le fait que** des feuilles métalliques sont prévues sur les deux côtés de la couche de coeur.

5. Utilisation d'une dalle stratifiée réfractaire à trois couches, selon l'une des revendications 1 à 4, pour l'aménagement intérieur dans le bâtiment et la construction navale.
